# EUROPEAN PATENT SPECIFICATION

(11) **EP 4 478 513 B1**
(45) Date of publication and mention of the grant of the patent: **18.11.2026**
(21) Application number: 23792126.7
(22) Date of filing: 17.04.2023
(51) Int. Cl.: H01M 50/308, A62C 3/16, H01M 10/6554, H01M 50/24, H01M 50/204, H01M 50/211, H01M 50/358, H01M 50/367, H01M 50/383

(54) **BATTERY MODULE AND BATTERY PACK INCLUDING THE SAME**
BATTERIEMODUL UND BATTERIEPACK DAMIT
MODULE DE BATTERIE ET BLOC-BATTERIE LE COMPRENANT

(30) Priority: 20.04.2022 KR 20220048856
(43) Date of publication of application: 18.12.2024
(73) Proprietor: LG Energy Solution, Ltd., Seoul 07335 (KR)
(72) Inventor: KIM, Jae Wook, Daejeon 34122 (KR); LEE, Yongho, Daejeon 34122 (KR)
(74) Representative: Plasseraud IP
(86) International application number: PCT/KR2023/005167
(87) International publication number: WO 2023/204550

(56) References cited:
- WO-A1-2016/147227
- WO-A1-2021/221342
- KR-A- 20120 090 027
- KR-A- 20190 022 485
- KR-A- 20190 054 805
- KR-A- 20210 122 510
- KR-A- 20210 133 535
- US-A1- 2012 164 490

## Description

### [TECHNICAL FIELD]

The present disclosure relates to a battery module and a battery pack including the same, and more particularly, to a battery module having a novel flame suppression structure, and a battery pack including the same.

### [BACKGROUND]

With the technology development and increased demand for mobile devices, demand for secondary batteries as energy sources have been rapidly increasing. In particular, a secondary battery has attracted considerable attention as an energy source for power-driven devices, such as an electric bicycle, an electric vehicle, and a hybrid electric vehicle, as well as an energy source for mobile devices, such as a mobile phone, a digital camera, a laptop computer and a wearable device.

In small mobile devices, one, or two, or three battery cells are used per device, while medium- or large-sized devices such as vehicles require high power and large capacity. Therefore, a medium- or large-sized battery module having a plurality of battery cells electrically connected to one another is used.

Since medium- or large-sized battery modules are preferably manufactured with as small a size and weight as possible, a prismatic battery, a pouch-type battery, or the like, which can be stacked with high integration and has a small weight relative to capacity, is mainly used as a battery cell of the medium- or large-sized battery modules. Such a battery module has a structure in which a plurality of cell assemblies including a plurality of unit battery cells are connected in series to obtain high output. Further, the battery cell includes positive and negative electrode current collectors, a separator, an active material, an electrolyte, and the like, and thus can be repeatedly charged and discharged through an electrochemical reaction between components.

Meanwhile, in recent years, amid the growing need for large-capacity structures including their utilization as an energy storage source, there is an increasing demand for battery packs having a multi-module structure formed by assembling a plurality of battery modules in which a plurality of secondary batteries are connected in series and/or in parallel.

Further, when a plurality of battery cells are connected in series or in parallel to configure a battery pack, it is common to configure a battery module composed of at least one battery cell first and then configure a battery pack by using at least one battery module and adding other components.

Generally, when a secondary battery is heated over a proper temperature, the performance of the secondary battery may deteriorate, and in the worst case, there is also a risk of an explosion or ignition. **In** particular, a plurality of secondary batteries, that is, a battery module or a battery pack having battery cells can accumulate the heat emitted from the plurality of battery cells in a narrow space, which may raise the temperature of the battery module quickly and severely. **In** other words, a battery module including a large number of battery cells, and a battery pack equipped with such a battery module can obtain high output, but it is not easy to remove heat generated from the battery cells during charging and discharging. When the heat dissipation of the battery cell is not properly performed, deterioration of the battery cells is accelerated, the lifespan is shortened, and the possibility of explosion or ignition increases.

Moreover, if a medium- or large-sized battery module is included in a battery pack for a vehicle1, the battery module may be frequently exposed to direct sunlight and may be placed under high-temperature conditions, for example, in summer or in a desert.

At this time, when thermal runaway occurs in the battery module and the battery pack, a flame is generated, and a fire is highly likely to occur due to gases, ignition sources, or the like generated from the battery cells. Moreover, when the inside of the battery module and the battery pack is sealed, the degree of ignition inside the battery pack may be reduced due to lack of oxygen, but when the internal gas is vented to the outside to prevent the battery pack from exploding due to increased internal pressure, the scale and possibility of internal ignition is higher. An example of a battery including a release mechanism for releasing gas from a battery to outside the case with safety can be found for instance in US 2012164490 A1.

Therefore, in order to minimize the possibility and scale of ignition outside the battery module and battery pack in the event of a thermal runaway, there is a need to introduce a novel flame suppression structure that can suppress flames generated inside battery modules and battery packs.

### [DETAILED DESCRIPTION OF THE INVENTION]

### [Technical Problem]

It is an object of the present disclosure to provide a battery module having a novel flame suppression structure, and a battery pack including the same.

However, the objects and advantages of the present disclosure are not limited to those described above, and other objects and advantages not mentioned above will be clearly understood by those skilled in the art from the following description.

### [Technical Solution]

The present disclosure provides a battery module as defined by independent claim 1 and a battery pack as defined by independent claim 14. Preferred embodiments are defined in the appended dependent claims. The battery module comprising: a battery cell stack in which a plurality of battery cells are stacked; a module frame that houses the battery cell stack; and end plates that cover the front and rear surfaces of the battery cell stack exposed from the module frame, wherein the end plates include a front end plate and a rear end plate, and further includes a first venting hole and a second venting hole formed in the front end plate and the rear end plate, a venting plate formed on the rear end plate so as to be connected to the second venting hole, and a duct member formed on the upper part of the module frame so as to be connected to the venting plate, wherein the duct member extends in a longitudinal direction of an upper part of the module frame and is connected to the front end plate.

The duct member may include a duct part that is formed in a longitudinal direction of the upper part of the module frame; and a fire extinguishing agent-housing part that is connected to the duct part and houses a fire extinguishing agent.

The duct part and the fire extinguishing agent-housing part may be integrally formed.

An end of the duct part may be fitted into and coupled to the venting plate.

The fire extinguishing agent-housing part is formed to be adjacent to the front end plate, and the battery module may further comprise a first cap that is formed between the first venting hole and the fire extinguishing agent-housing part.

The fire extinguishing agent may include a fire extinguishing water.

The battery module may further comprise a third venting hole that is formed on an upper part of the fire extinguishing agent-housing part, and a second cap that covers the third venting hole.

The battery module may further comprise a fourth venting hole that is formed on the side surface part of the fire extinguishing agent-housing part, and a third cap that covers the fourth venting hole.

The battery module further comprises a flame arrestor formed on the side surface part of the fire extinguishing agent-housing part, wherein the flame arrester may be formed to be adjacent to the fourth venting hole and the third cap.

When thermal runaway occurs in the battery module according to the present embodiment, the first cap and the third cap may be melted.

A hole may be formed in the second cap, and when thermal runaway occurs, vapors may be discharged through the hole.

The battery module according to the present embodiment may further comprise a fire extinguishing chemical that is formed in the duct part.

The fire extinguishing chemical may be formed along the longitudinal direction of the duct part.

The fire extinguishing chemical may be formed inside the duct part, and may be formed so as to be in contact with the side surface part of the duct part.

The battery pack comprising the battery module.

The battery pack according to the present embodiment may further comprise a pack frame that houses the battery module.

The battery pack according to the present embodiment may comprise a plurality of the battery modules, and further comprise a heat dissipation member interposed between the battery modules adjacent to each other among the battery modules.

### [Advantageous Effects]

A battery module and a battery pack including the battery module according to one embodiment of the present disclosure include a flame suppression structure connected by a venting plate and a duct member, thereby capable of effectively suppressing flames inside the battery module and battery pack.

In particular, the battery module of the present disclosure includes primary flame suppression by a fire extinguishing chemical inside the duct member, secondary flame suppression by the fire extinguishing agent housed in the fire extinguishing agent-housing part of the duct member, and tertiary flame suppression by vapors emitted by the third venting hole and the second cap of the duct member, thereby capable of forming a plurality of flame suppression paths to achieve effective flame suppression effect.

In addition, the present disclosure minimizes the possibility and scale of ignition inside and outside the battery module and battery pack, thereby capable of improving the safety of the battery module and battery pack and protecting users.

The effects of the present disclosure are not limited to the effects mentioned above and additional other effects not mentioned above will be clearly understood from the detailed description and the appended drawings by those skilled in the art.

### [BRIEF DESCRIPTION OF THE DRAWINGS]

FIG. 1 is an exploded perspective view of a battery module according to one embodiment of the present disclosure;
FIG. 2 is an exploded perspective view showing only a part of components of a battery module according to one embodiment of the present disclosure;
FIG. 3 is a perspective view showing a state in which the components of FIG. 2 are coupled together;
FIG. 4 is a perspective view showing a state in which all the components of FIG. 1 are coupled together;
FIG. 5 is a cross-sectional view showing a cross section taken along the cutting line A-A' of FIG. 4;
FIG. 6 is a diagram showing a moving path of a flame when a flame occurs inside the battery module of FIG. 4;
FIG. 7 is an enlarged view of components corresponding to a section B of FIG. 7;
FIG. 8 is a perspective view showing a moving path of a flame centering on a cross section cut along the cutting line A-A' of FIG. 4;
FIGS. 9 to 11 are diagrams showing duct members among the components of the battery module of FIG. 4;
FIGS. 12 to 14 are perspective views showing a state when flames occur inside the battery module;
FIG. 15 is a perspective view showing a battery cell included in the battery module of the present disclosure; and
FIG. 16 is a perspective view showing a battery pack according to another embodiment of the present disclosure.

### [DETAILED DESCRIPTION OF THE EMBODIMENTS]

Hereinafter, various embodiments of the present disclosure will be described in detail with reference to the accompanying drawings so that those skilled in the art can easily carry out them. The present disclosure may be modified in various different ways, and is not limited to the embodiments set forth herein.

Portions that are irrelevant to the description will be omitted to clearly describe the present disclosure, and like reference numerals designate like elements throughout the description.

Further, in the drawings, the size and thickness of each element are arbitrarily illustrated for convenience of description, and the present disclosure is not necessarily limited to those illustrated in the drawings. In the drawings, the thickness of layers, regions, etc. are exaggerated for clarity. In the drawings, for convenience of description, the thicknesses of a part and an area are exaggerated.

In addition, it will be understood that when an element such as a layer, film, area, or plate is referred to as being "on" or "above" another element, it can be directly on the other element or intervening elements may also be present. In contrast, when an element is referred to as being "directly on" another element, it means that other intervening elements are not present. Further, the word "on" or "above" means arranged on or below a reference portion, and does not necessarily mean being arranged on the upper end of the reference portion toward the opposite direction of gravity.

Further, throughout the description, when a portion is referred to as "including" or "comprising" a certain component, it means that the portion can further include other components, without excluding the other components, unless otherwise stated.

Further, throughout the description, when it is referred to as "planar", it means when a target portion is viewed from the upper side, and when it is referred to as "cross-sectional", it means when a target portion is viewed from the side of a cross section cut vertically.

The terms "first," "second," etc. are used to explain various components, but the components should not be limited by the terms. These terms are only used to distinguish one component from the other component.

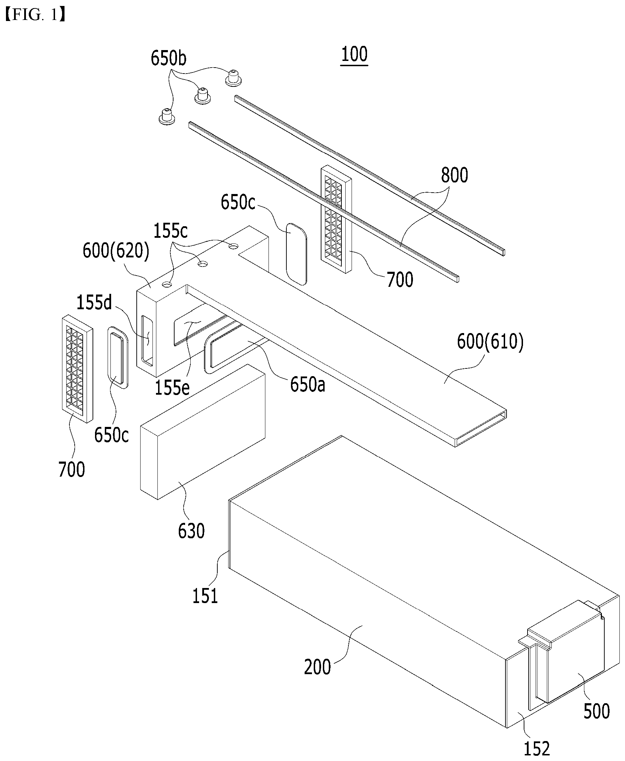

Now, the battery module according to the present disclosure will be described with reference to FIGS. 1 to 4 and 15.

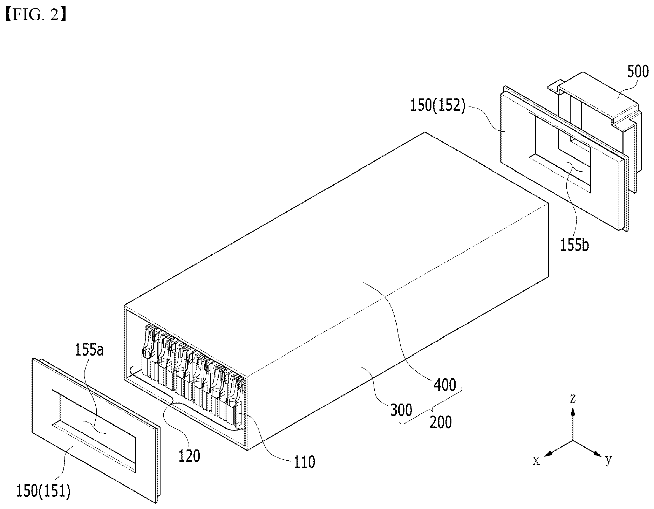

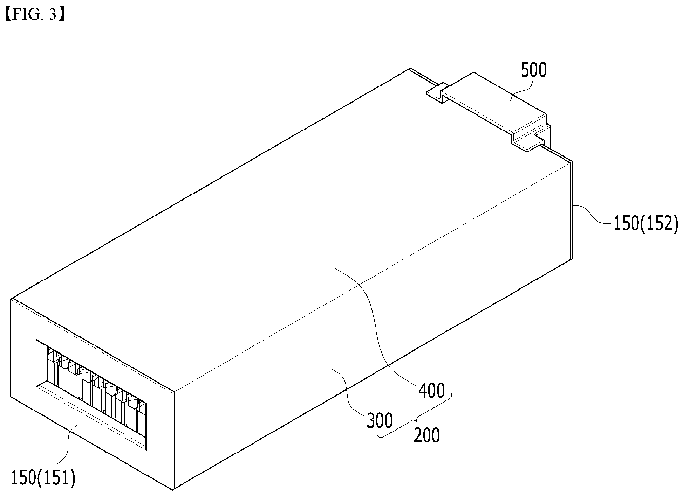

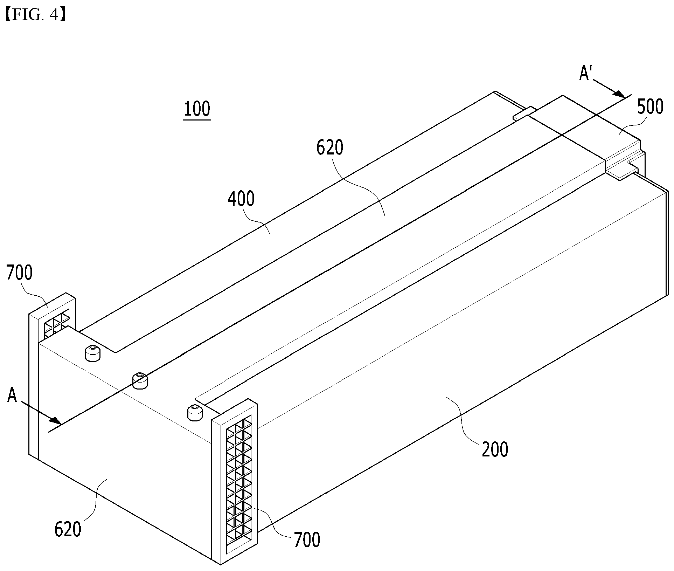

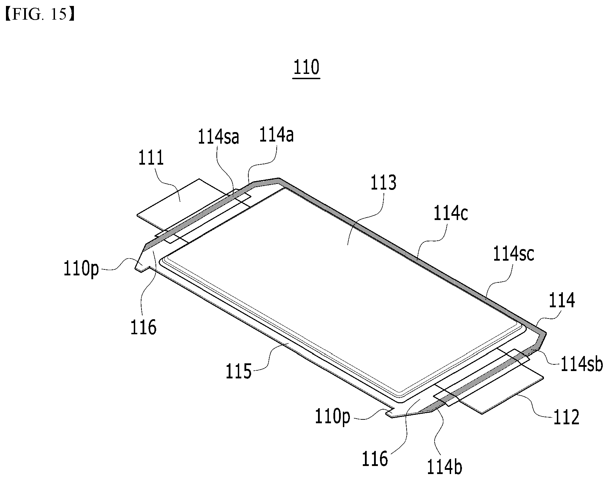

FIG. 1 is an exploded perspective view of a battery module according to one embodiment of the present disclosure. FIG. 2 is an exploded perspective view showing only a part of components of a battery module according to one embodiment of the present disclosure. FIG. 3 is a perspective view showing a state in which the components of FIG. 2 are coupled together. FIG. 4 is a perspective view showing a state in which all the components of FIG. 1 are coupled together. FIG. 15 is a perspective view showing a battery cell included in the battery module of the present disclosure.

Referring to FIGS. 1 to 4, the battery module 100 according to the present embodiment includes a battery cell stack 120 in which a plurality of battery cells 110 are stacked, and a module frame 200 that houses the battery cell stack 120.

First, the battery cell 110 is preferably a pouch type battery cell, and can be formed in a rectangular sheet-like structure. For example, referring to Fig. 15, the battery cell 110 according to the present embodiment has a structure in which two electrode leads 111 and 112 face each other and protrude from one end 114a and the other end 114b of the cell main body 113, respectively. That is, the battery cell 110 includes electrode leads 111 and 112 that are protruded in mutually opposite directions. More specifically, the electrode leads 111 and 112 are connected to an electrode assembly (not shown), and are protruded from the electrode assembly (not shown) to the outside of the battery cell 110.

Meanwhile, the battery cell 110 can be produced by joining both ends 114a and 114b of a cell case 114 and one side part connecting them in a state in which an electrode assembly (not shown) is housed in a cell case 114. In other words, the battery cell 110 according to the present embodiment has a total of three sealing part s 114sa, 114sb and 114sc, wherein the sealing parts 114sa, 114sb and 114sc have a structure that is sealed by a method such as thermal fusion, and the remaining other side part may be composed of a connecting part 115. In particular, the sealing parts 114sa, 114sb, and 114sc may include a sealing part 114sc formed in the longitudinal direction of the battery cell and sealing parts 114sa and 114sb formed in the width direction of the battery cell. The cell case 114 may be made of a laminated sheet including a resin layer and a metal layer. At this time, between both ends 114a and 114b of the cell case 114 may be defined as the longitudinal direction of the battery cell 110, and between one side part 114c connecting both ends 114a and 114b of the cell case 114 and the connecting part 115 may be defined as a width direction of the battery cell 110.

Further, the connecting part 115 may extend long along one edge of the battery cell 110, and a bat-ear 110p may be formed at the end of the connecting part 115. Further, while the cell case 114 is sealed with the protruding electrode leads 111 and 112 being interposed therebetween, a terrace part 116 may be formed between the electrode leads 111 and 112 and the cell main body 113. That is, the battery cell 110 may include a terrace part 116 formed to extend from the cell case 114 in the direction in which the electrode leads 111 and 112 protrude.

Such a battery cell 110 may be composed by a plurality of numbers, and the plurality of battery cells 110 may be stacked so as to be electrically connected to each other, thereby forming a battery cell stack 120. Particularly, as shown in FIG. 2, a plurality of battery cells 110 may be stacked along the direction parallel to the y-axis. Thereby, the electrode leads 111 and 112 may protrude in the x-axis direction and the -x-axis direction, respectively.

Meanwhile, the module frame 200 includes a U-shaped frame 300 which is opened at its upper, front and rear surfaces and covers the lower part and both side parts of the battery cell stack 120, and an upper plate 400 that covers the upper part of the battery cell stack 120. At this time, the U-shaped frame 300 may include a bottom part supporting the lower part of the battery cell stack 120, and side surface parts each extending upward from both ends of the bottom part. However, the module frame 200 is not limited thereto, and can be replaced with a frame having another shape such as an L-shaped frame or a mono-frame surrounding the battery cell stack 120 except the front and rear surfaces. The battery cell stack 120 housed inside the module frame 200 can be physically protected through the module frame 200.

The upper plate 400 can cover the opened upper side surface of the module frame 200. The end plate 150 can cover the front and rear surfaces of the battery cell stack 120 that are exposed from the module frame 200. The end plate 150 can be weld-coupled with the front and rear end edges of the upper plate 400 and the front and rear end edges of the module frame 200. At this time, the end plate may include a front end plate 151 and a rear end plate 152.

Conventional battery modules do not have a separate structure that can suppress flames generated during thermal runaway and minimize the possibility and scale of ignition inside and outside the battery module, which makes it difficult to secure the safety of the battery module.

Therefore, in order to minimize the possibility and scale of ignition outside the battery module and battery pack when thermal runaway occurs, there is a need to introduce a novel flame suppression structure that can suppress flames generated inside the battery module and battery pack.

Next, the battery module 100 according to the present embodiment will be described in more detail with reference to the previously referenced drawings and FIGS. 1 to 4 again.

Referring to FIGS. 1 to 4, a first venting hole 155a is formed in the front end plate 151 of the battery module 100 according to the present embodiment, and a second venting hole 155b may be formed in the rear end plate 152. Therefore, gases, flames, ignition sources, and the like generated during the thermal runaway inside the battery module 100 may be discharged to the outside via the front and rear surfaces of the battery module 100 by the first venting hole 155a and the second venting hole 155b, respectively.

At this time, the battery module 100 according to the present embodiment may include a venting plate 500 formed on the rear end plate 152.

The venting plate 500 may be connected to the second venting hole 155b. The venting plate 500 may cover the area of the rear end plate 152 opened by the second venting hole 155b. At the same time, the venting plate 500 may be connected to the upper part of the module frame 200.

At this time, in order for the venting plate 500 to be connected to the duct member 600 as will be described later, a partially spaced space may be formed between the venting plate 500 and the upper part of the module frame 200. Therefore, the venting plate 500 can be guided so that the flame and gas moved to the venting plate 500 by the second venting hole 155b can move to the upper part of the module frame 200 along the venting plate 500 and move along the longitudinal direction of the upper part of the module frame 200 by the duct member 600.

Meanwhile, a duct member 600 may be formed on the upper part of the module frame 200, that is, the upper plate 400. At this time, the duct member 600 may be connected to the venting plate 500. Further, the duct member 600 can extend in the longitudinal direction of the upper part of the module frame 200 to be connected to the front end plate 151. At this time, the longitudinal direction of the upper part of the module frame 200 may be the x-axis direction shown in FIG. 2.

Next, the duct member 600 included in the battery module 100 according to the present embodiment will be described in more detail.

Referring to FIGS. 1 and 4, the duct member 600 may include a duct part 610 formed in the longitudinal direction of the module frame 200 and a fire extinguishing agent-housing part 620 that is connected to the duct part 610 and houses the fire extinguishing agent 630.

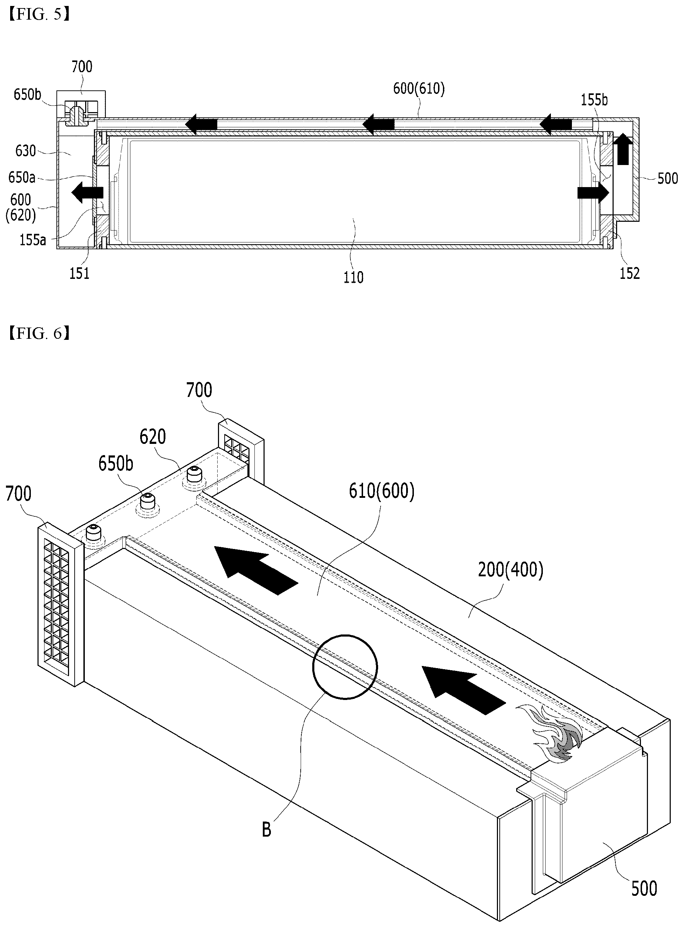

FIG. 5 is a cross-sectional view showing a cross section taken along the cutting line A-A' of FIG. 4.

Referring to FIG. 5, the duct part 610 and the fire extinguishing agent-housing part 620 may be connected to each other and integrally formed so that the flame can move. Therefore, as shown in FIG. 5, the flame and gas generated from the front surface of the battery module 100 move to the fire extinguishing agent-housing part 620 along the first venting hole 155a, the first cap 650a and the fifth venting hole 155e, and the flame and gas generated from the rear surface of the battery module 100 may move to the fire extinguishing agent-housing part 620 along the second venting hole 155b, the venting plate 500 and the duct part 610.

As mentioned above, the duct member 600 can be connected to the venting plate 500. In particular, in order for the duct member 600 to be connected with the venting plate 500, one end of the duct part 610 may be fitted into and coupled to a spaced apart space between the venting plate 500 and the upper part of the module frame 200. At this time, the spaced apart space may be formed in a shape and size corresponding to the shape and size of the duct part 610 in order to fix the duct unit 610 and facilitate the movement of flame and gas by the duct part 610.

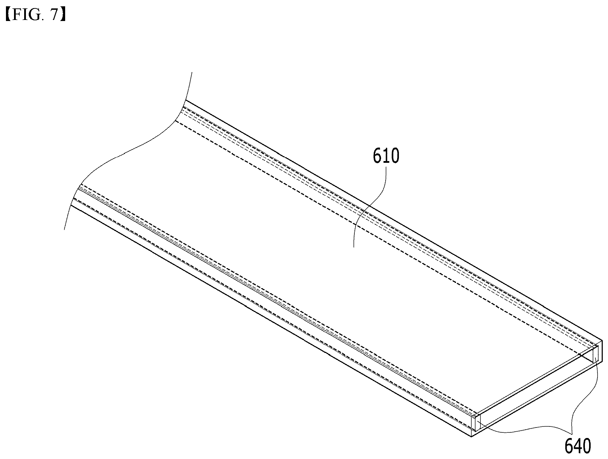

FIG. 6 is a diagram showing a moving path of a flame when a flame occurs inside the battery module of FIG. 4. FIG. 7 is an enlarged view of components corresponding to a section B of FIG. 7.

Referring to FIGS. 6 and 7, the duct part 610 may be formed in a hollow tubular shape. At this time, a fire extinguishing chemical 640 may be formed in the duct part 610. Specifically, the fire extinguishing chemical 640 may be formed along the length direction of the duct part 610. The fire extinguishing chemical 640 may be formed inside the duct part 610, and may be formed inside the duct part 610 having the tubular shape. At this time, as shown in FIG. 7, the fire extinguishing chemical 640 may be formed to contact the side surface part of the duct unit 610, so that the fire extinguishing chemical 640 can continuously act on the flames and gases passing through the duct part 610 to suppress the flames and gases.

The fire extinguishing agent-housing part 620 of the duct member 600 according to this embodiment may be formed to be adjacent to the front end plate 151. Referring to FIG. 5, the fire extinguishing agent-housing part 620 may be formed to cover the entire front end plate 151. Therefore, it may be formed adjacent to the first venting hole 155a.

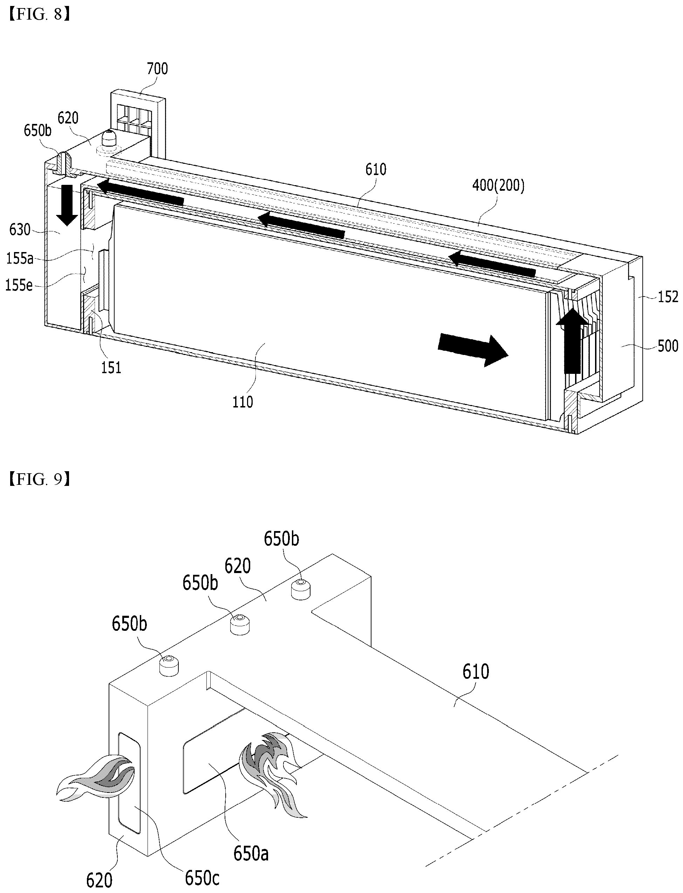

FIG. 8 is a perspective view showing a moving path of a flame centering on a cross section cut along the cutting line A-A' of FIG. 4.

At this time, a first cap 650a may be formed between the first venting hole 155a and the fire extinguishing agent-housing part 620. Specifically, a fifth venting hole 155e may be formed on one side surface part of the fire extinguishing agent-housing part 620 located between the fire extinguishing agent-housing part 620 and the first cap 650a, wherein the first cap 650a may cover the fifth venting hole 155e. As will be described later, the battery module 100 in a normal operating state exists in a state where the first cap 650a covers the fifth venting hole 155e, and thus, the first venting hole 155a and the fire extinguishing agent 630 housed in the fire extinguishing agent-housing part 620 may exist while spaced apart from each other. However, referring to FIG. 8, when thermal runaway occurs in the battery module 100, the first cap 650a is melted by flame and gas generated inside the battery module 100, so that the first venting hole 155a and the fifth venting hole 155e can communicate with each other. Therefore, the flame and gas can be suppressed by the fire extinguishing agent 630 housed in the fire extinguishing agent-housing part 620.

Further, referring to FIG. 1, a third venting hole 155c may be formed in the upper part of the fire extinguishing agent-housing part 620, and a fourth venting hole 155d may be formed on one side surface part of the fire extinguishing agent-housing part 620. At this time, one side surface part of the fire extinguishing agent-housing part 620 where the fourth venting hole 155d is formed may be one side surface part of the fire extinguishing agent-housing part 620 formed to be adjacent to the flame arrester 700 as will be described later.

FIGS. 9 to 11 are diagrams showing duct members among the components of the battery module of FIG. 4.

Referring to Fig. 9, a second cap 650b covering the third venting hole 155c may be formed on the upper part of the fire extinguishing agent-housing part 620, and a third cap 650c covering the fourth venting hole 155d may be formed on one side surface part of the fire extinguishing agent-housing part 620. The battery module 100 in a normal operating state exists in a state where the second cap 650b and the third cap 650c cover the third venting hole 155c and the fourth venting hole 155d, respectively. However, when thermal runaway occurs inside the battery module 100, the third cap 650c can be melted by the flame and gas to form a moving path for the flame and gas.

The third venting hole 155c and the second cap 650b may be formed by a plurality of numbers, and the fourth venting hole 155d and the third cap 650c may be formed on at least one side surface of the fire extinguishing agent-housing part 620, or may be formed on a plurality of side surfaces.

At this time, the second cap 650b may also be melted by flames, but may be formed of a flame retardant material that is not melted by flames so that vapors can be discharged via the second cap 650b. The second cap 650b is formed on the upper part of the fire extinguishing agent-housing part 620, and a hole may be formed in the second cap 650b. When thermal runaway occurs inside the battery module 100, the flame and gas come into contact with the fire extinguishing agent-housing part 620 and the fire extinguishing agent 630 inside the fire extinguishing agent-housing part 620, wherein the vapor generated by the flame and gas coming into contact with the fire extinguishing agent 630 may be discharged to the outside of the fire extinguishing agent-housing part 620 through the hole formed in the second cap 650b.

Meanwhile, the fire extinguishing agent 630 may be a fire extinguishing water, a liquid fire extinguishing chemical or a foam fire extinguishing agent. More specifically, the fire extinguishing agent 630 may be a liquid fire extinguishing agent or a fire extinguishing water, preferably a fire extinguishing water. Therefore, the flame and gas are suppressed by the fire extinguishing agent 630 formed in the fire extinguishing agent-housing part 620, thereby minimizing the possibility and scale of ignition inside and outside the battery module 100. In particular, the duct member 600 is configured so that the flame and gas can smoothly contact the fire extinguishing agent 630, so that the flame is suppressed in contact with the fire extinguishing agent 630 before being discharged outside the battery module, thereby improving the safety of the battery module.

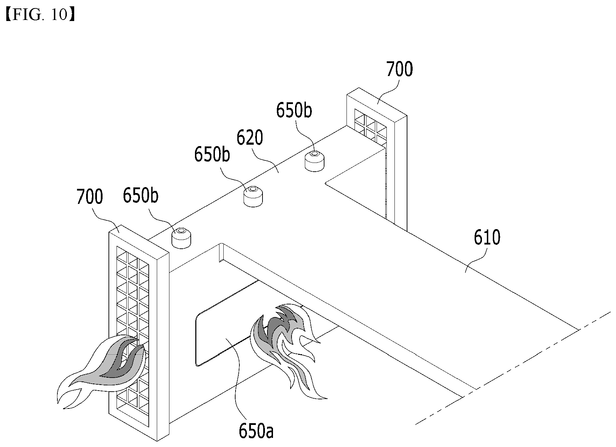

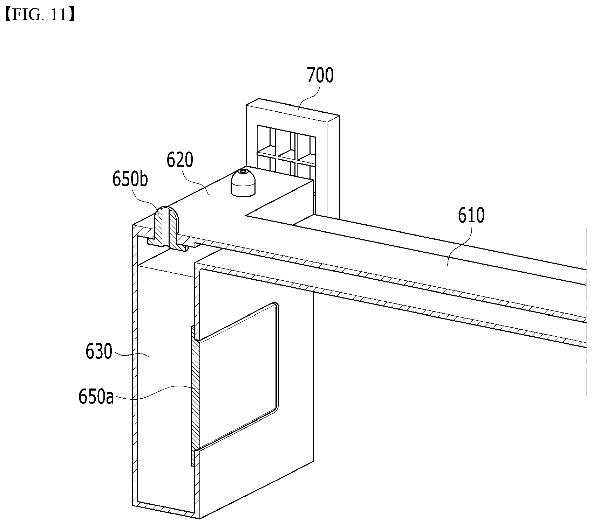

Referring to FIGS. 10 and 11, a flame arrestor 700 may be formed on one side surface part of the fire extinguishing agent-housing part 620. At this time, the flame arrester 700 may include a porous structure or a mesh structure, and as it passes through the above structure, the temperature of the flame and gas is lowered, thereby minimizing the possibility and scale of external ignition by the flame. The flame arrester 700 forms a housing or a cover that houses the porous structure or the mesh structure, thereby ensuring stable flame arrester performance.

The flame arrester 700 formed in the battery module 100 according to the present embodiment may be formed to be adjacent to the fourth venting hole 155d and the third cap 650c. As mentioned above, the third cap 650c may be melted by flame and high-temperature gas generated when thermal runaway occurs inside the battery module 100. The fourth venting hole 155d and the flame arrester 700 communicate with each other by the molten third cap 650c, so that flame and gas vented from the fourth venting hole 155d can be stabilized while passing through the flame arrestor 700. At this time, the flame and gas passing through the flame arrester 700 are deprived of heat while being in contact with the porous structure or the mesh structure of the flame arrester 700, the temperature is reduced and the flame is suppressed, so that stabilized flame and gas can be discharged to the outside of the battery module 100.

Next, a flame generation path and a flame suppression path when thermal runaway occurs in the battery module 100 according to the present invention will be described in detail with reference to FIGS. 8 and 12 to 14.

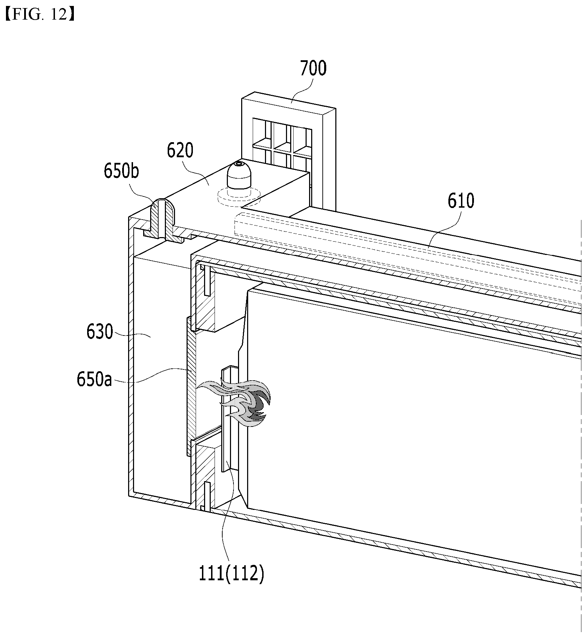

FIGS. 12 to 14 are perspective views showing a state when flames occur inside the battery module.

Referring to FIG. 8, flame and gas generated from the rear surface of the battery module 100 may move along the second venting hole 155b of the rear end plate 152, the venting plate 500, and the duct part 610. At this time, the flame and gas may move through the duct part 610 and be primarily suppressed through the fire extinguishing agent 640 formed in the duct part 610.

After that, the flame and gas primarily suppressed in the duct part 610 can move along the duct part 610 and reach the fire extinguishing agent-housing part 620. The flame and gas are suppressed by the fire extinguishing agent 630 housed in the fire extinguishing agent-housing part 620, and in some cases, vapors and gases may be generated from the fire extinguishing agent 630 by the flame and gas. The vapors and gases are discharged to the outside through the second cap 650b, which can secondarily suppress the flame.

When the temperature of flame and gas in the fire extinguishing agent-housing part 620 is maintained at a high temperature, the third cap 650c may be melted. At this time, the third cap 650c is melted, and the fourth venting hole 155d and the flame arrestor 700 can communicate with each other. Accordingly, the flame and gas vented through the fourth venting hole 155d can be tertiarily suppressed while passing through the flame arrestor 700.

The flame and gas generated from the front surface of the battery module 100 can have a simplified path compared to the flame and gas generated from the rear surface.

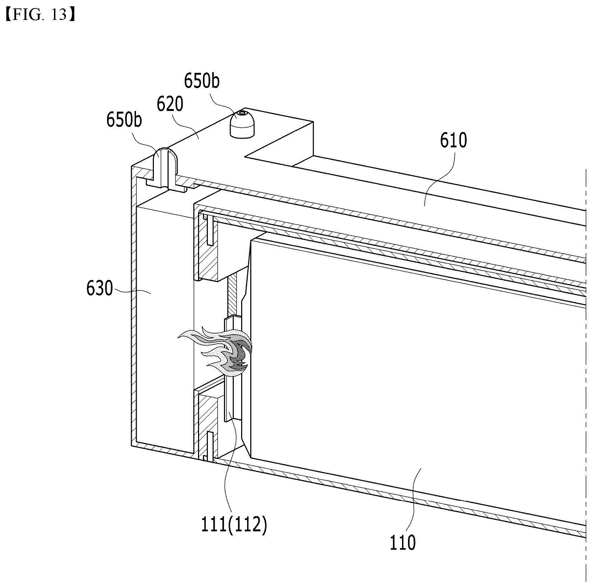

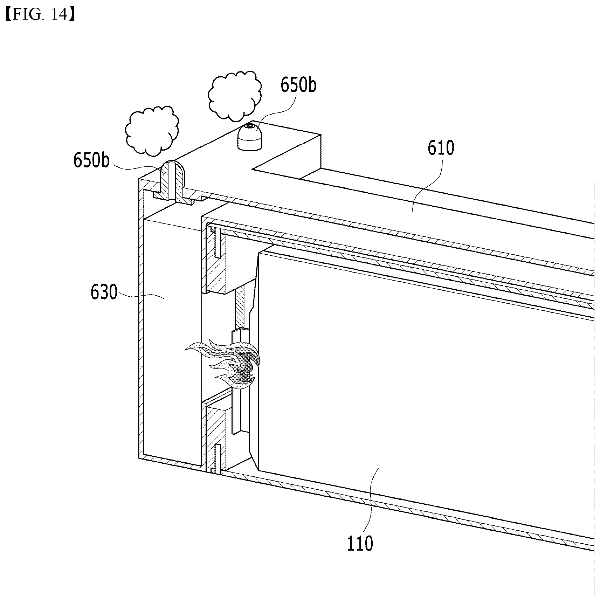

Referring to FIGS. 12 and 13, the first cap 650a may be melted by the flame generated from the front surface of the battery module 100. Therefore, the first venting hole 155a and the fifth venting hole 155e communicate with each other, so that flame and gas can be moved to the fire extinguishing agent-housing part 620. The flame and gas are suppressed by the fire extinguishing agent 630 housed in the fire extinguishing agent-housing part 620, and in some cases, vapors and gases may be generated from the fire extinguishing agent 630 by the flame and gas. Referring to FIG. 14, the vapor and gas are discharged to the outside through the second cap 650b, which can primarily suppress the flame.

When the temperature of the flame and gas in the fire extinguishing agent-housing part 620 is maintained at a high temperature, the third cap 650c can be melted. At this time, the third cap 650c is melted, and the fourth venting hole 155d and the flame arrester 700 may communicate with each other. Accordingly, the flame and gas vented through the fourth venting hole 155d can secondarily suppress while passing through the flame arrestor 700.

The path and suppression process of the flame and gas generated from the front or rear surface of the battery module 100 have been separately described above, but this assists in understanding the invention, and the path and suppression process of the flame and gas generated from the front and rear surfaces may be formed by coupling the above-mentioned paths with each other. In particular, when the flame and gas generated from the front surface are moved to the rear surface, they may follow the flame path from the rear surface of the battery module, and when the flame and gas generated at the rear surface move to the front surface, they may follow the flame path from the front surface of the battery module.

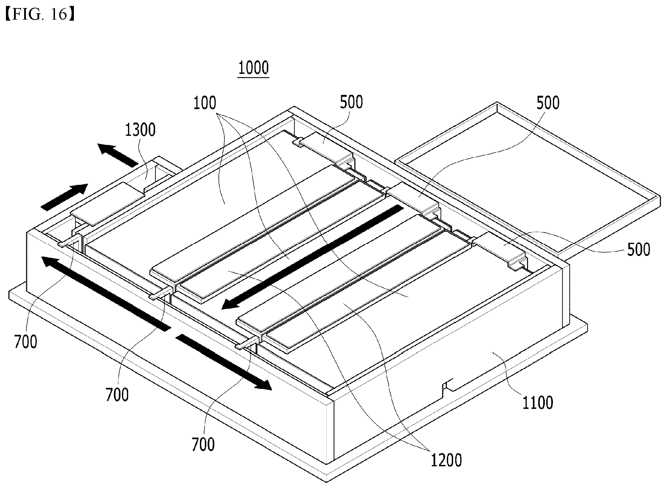

Next, a battery pack according to another embodiment of the present disclosure will be described with reference to FIG. 16.

FIG. 16 is a perspective view showing a battery pack according to another embodiment of the present disclosure.

Referring to FIG. 16, the battery pack 1000 according to the present embodiment includes the above-mentioned battery module 100 and a pack frame 1100 that houses the battery module 100. At this time, the battery pack 1000 according to the present embodiment may include a plurality of battery modules 100, and may further include a heat dissipation member 1200 interposed between the battery modules 100 adjacent to each other among the battery modules 100.

At this time, the battery pack 1000 according to the present embodiment may include a heat dissipation member 1200 formed between the plurality of battery modules 100, wherein the duct part 610 may be formed between the heat dissipation members 1200 adjacent to each other. Therefore, the heat dissipation member 1200 can effectively transfer and disperse the heat generated in the battery module 100, and at the same time, can effectively suppress the flame by the flame suppression path when thermal runaway occurs.

In particular, the gas that has passed through the flame arrestor 700 of the battery module 100 moves along a moving path inside the battery pack 1000, and can be discharged to the outside of the battery pack 1000 through the battery pack vent 1300. At this time, the flame and gas pass through the plurality of flame arresters 700 formed between the plurality of battery modules 100, thereby effectively suppressing the scale.

In addition, the battery pack of the present disclosure may have a structure in which one or more of the battery modules according to the present embodiment are gathered, and packed together with a battery management system (BMS) and a cooling device that control and manage battery's temperature, voltage, etc.

The battery pack can be applied to various devices. Such a device can be applied to a vehicle means such as an electric bicycle, an electric vehicle, or a hybrid vehicle, but the present disclosure is not limited thereto, and is applicable to various devices that can use a battery module, which is also falls under the scope of the present disclosure.

Although the invention has been illustrated and described above with reference to preferred embodiments thereof, the scope of the present disclosure is not limited to specific embodiments described above, and numerous other modifications can be made by those skilled in the art, without departing from scope of the appended claims.

### [Description of Reference Numerals]

100: battery module
110: battery cell
120: battery cell stack
150: end plate
155a, 155b: first and second venting holes
200: module frame
300: U-shaped frame
400: upper plate
500: venting plate
600: duct member
610: duct part
620: fire extinguishing agent-housing part
630: fire extinguishing agent
650a, 650b, 650c, 650d: first, second, third and fourth caps
700: flame arrester
800: fire extinguishing chemical
1000: battery pack
1100: pack frame
1200: heat dissipation member
1300: venting part

## Claims

1. A battery module (100) comprising:
a battery cell stack (120) in which a plurality of battery cells (110) are stacked;
a module frame (200) that houses the battery cell stack; and
end plates (150) that cover the front and rear surfaces of the battery cell stack exposed from the module frame,
wherein the end plates include a front end plate (151) and a rear end plate (152), and further include,
a first venting hole (155a) and a second venting hole (155b) formed in the front end plate and the rear end plate,
a venting plate (500) formed on the rear end plate so as to be connected to the second venting hole, and
a duct member (600) formed on the upper part of the module frame so as to be connected to the venting plate,
wherein the duct member extends in a longitudinal direction of an upper part of the module frame and is connected to the front end plate.

2. The battery module of claim 1, wherein:
the duct member includes a duct part (610) that is formed in a longitudinal direction of the upper part of the module frame; and a fire extinguishing agent-housing part (620) that is connected to the duct part and houses a fire extinguishing agent (630), preferably a fire extinguishing water.

3. The battery module of claim 2, wherein:
the duct part and the fire extinguishing agent-housing part are integrally formed.

4. The battery module of claim 2, wherein:
an end of the duct part is fitted into and coupled to the venting plate.

5. The battery module of claim 2, wherein:
the fire extinguishing agent-housing part is formed to be adjacent to the front end plate, and
the battery module further comprises a first cap (650a) that is formed between the first venting hole and the fire extinguishing agent-housing part.

6. The battery module of claim 2, further comprising:
a third venting hole (155c) that is formed on an upper part of the fire extinguishing agent-housing part, and
a second cap (650b) that covers the third venting hole.

7. The battery module of claim 6, further comprising:
a fourth venting hole (155d) that is formed on the side surface part of the fire extinguishing agent-housing part, and
a third cap (650c) that covers the fourth venting hole.

8. The battery module of claim 7, further comprising:
a flame arrestor (700) formed on the side surface part of the fire extinguishing agent-housing part,
wherein the flame arrester is formed to be adjacent to the fourth venting hole and the third cap.

9. The battery module of claim 7, wherein:
when thermal runaway occurs, the first cap and the third cap are melted.

10. The battery module of claim 7, wherein:
a hole is formed in the second cap, and
when thermal runaway occurs, vapors are discharged through the hole.

11. The battery module of claim 2, further comprising:
a fire extinguishing chemical (800) that is formed in the duct part.

12. The battery module of claim 11, wherein:
the fire extinguishing chemical is formed along the longitudinal direction of the duct part.

13. The battery module of claim 11, wherein:
the fire extinguishing chemical is formed inside the duct part, and is formed so as to be in contact with the side surface part of the duct part.

14. A battery pack (1000) comprising the battery module of claim 1.

15. The battery pack of claim 14, further comprising:
a plurality of the battery modules (100);
a pack frame (1100) that houses the plurality of battery module; and
a heat dissipation member (1200) interposed between the battery modules adjacent to each other among the plurality of battery modules.

## Patentansprüche

1. Batteriemodul (100), umfassend:
• einen Batteriezellenstapel (120), in dem eine Vielzahl von Batteriezellen (110) gestapelt sind;
• einen Modulrahmen (200), der den Batteriezellenstapel aufnimmt; und
• Endplatten (150), die die aus dem Modulrahmen freigelegte Vorder- und Rückseite des Batteriezellenstapels abdecken,
wobei die Endplatten eine vordere Endplatte (151) und eine hintere Endplatte (152) enthalten, und ferner Folgendes enthalten:
• ein erstes Entlüftungsloch (155a) und ein zweites Entlüftungsloch (155b), die in der vorderen Endplatte und der hinteren Endplatte ausgebildet sind,
• eine Entlüftungsplatte (500), die auf der hinteren Endplatte so ausgebildet ist, dass sie mit dem zweiten Entlüftungsloch verbunden ist, und
• ein Kanalelement (600), das auf dem oberen Teil des Modulrahmens so ausgebildet ist, dass es mit der Entlüftungsplatte verbunden ist,
wobei sich das Kanalelement in einer Längsrichtung eines oberen Teils des Modulrahmens erstreckt und mit der vorderen Endplatte verbunden ist.

2. Batteriemodul nach Anspruch 1, wobei:
das Kanalelement einen Kanalteil (610) enthält, der in einer Längsrichtung des oberen Teils des Modulrahmens ausgebildet ist; und einen Feuerlöschmittel-Aufnahmeteil (620), der mit dem Kanalteil verbunden ist und ein Feuerlöschmittel (630), vorzugsweise ein Feuerlöschwasser, aufnimmt.

3. Batteriemodul nach Anspruch 2, wobei:
der Kanalteil und der Feuerlöschmittel-Aufnahmeteil einstückig ausgebildet sind.

4. Batteriemodul nach Anspruch 2, wobei:
ein Ende des Kanalteils in die Entlüftungsplatte eingesetzt und mit dieser gekoppelt ist.

5. Batteriemodul nach Anspruch 2, wobei:
der Feuerlöschmittel-Aufnahmeteil so ausgebildet ist, dass er an die vordere Endplatte angrenzt, und
das Batteriemodul ferner eine erste Kappe (650a) umfasst, die zwischen dem ersten Entlüftungsloch und dem Feuerlöschmittel-Aufnahmeteil ausgebildet ist.

6. Batteriemodul nach Anspruch 2, ferner umfassend:
• ein drittes Entlüftungsloch (155c), das an einem oberen Teil des Feuerlöschmittel-Aufnahmeteils ausgebildet ist, und
• eine zweite Kappe (650b), die das dritte Entlüftungsloch abdeckt.

7. Batteriemodul nach Anspruch 6, ferner umfassend:
• ein viertes Entlüftungsloch (155d), das an dem Seitenflächenteil des Feuerlöschmittel-Aufnahmeteils ausgebildet ist, und
• eine dritte Kappe (650c), die das vierte Entlüftungsloch abdeckt.

8. Batteriemodul nach Anspruch 7, ferner umfassend:
eine Flammensperre (700), die an dem Seitenflächenteil des Feuerlöschmittel-Aufnahmeteils ausgebildet ist,
wobei die Flammensperre so ausgebildet ist, dass sie an das vierte Entlüftungsloch und die dritte Kappe angrenzt.

9. Batteriemodul nach Anspruch 7, wobei:
wenn ein thermisches Durchgehen auftritt, die erste Kappe und die dritte Kappe geschmolzen werden.

10. Batteriemodul nach Anspruch 7, wobei:
ein Loch in der zweiten Kappe ausgebildet ist, und
wenn ein thermisches Durchgehen auftritt, Dämpfe durch das Loch abgeleitet werden.

11. Batteriemodul nach Anspruch 2, ferner umfassend:
eine Feuerlöschchemikalie (800), die in dem Kanalteil ausgebildet ist.

12. Batteriemodul nach Anspruch 11, wobei:
die Feuerlöschchemikalie entlang der Längsrichtung des Kanalteils ausgebildet ist.

13. Batteriemodul nach Anspruch 11, wobei:
die Feuerlöschchemikalie innerhalb des Kanalteils ausgebildet ist und so ausgebildet ist, dass sie in Kontakt mit dem Seitenflächenteil des Kanalteils steht.

14. Batteriepack (1000), umfassend das Batteriemodul nach Anspruch 1.

15. Batteriepack nach Anspruch 14, ferner umfassend:
• eine Vielzahl der Batteriemodule (100);
• einen Packungsrahmen (1100), der die Vielzahl von Batteriemodulen aufnimmt; und
• ein Wärmeableitungselement (1200) das zwischen den unter der Vielzahl von Batteriemodulen einander benachbarten Batteriemodulen angeordnet ist. Wärmeableitungselement

## Revendications

1. Un module de batterie (100) comprenant :
• un empilement de cellules de batterie (120) dans lequel une pluralité de cellules de batterie (110) sont empilées ;
• un cadre de module (200) qui loge l'empilement de cellules de batterie ; et
• des plaques d'extrémité (150) qui recouvrent les surfaces avant et arrière de l'empilement de cellules de batterie exposées depuis le cadre de module,
dans lequel les plaques d'extrémité comprennent une plaque d'extrémité avant (151) et une plaque d'extrémité arrière (152), et comprennent en outre :
• un premier trou d'évent (155a) et un deuxième trou d'évent (155b) formés dans la plaque d'extrémité avant et la plaque d'extrémité arrière,
• une plaque d'évent (500) formée sur la plaque d'extrémité arrière de manière à être connectée au deuxième trou d'évent, et
• un élément de conduit (600) formé sur la partie supérieure du cadre de module de manière à être connecté à la plaque d'évent,
dans lequel l'élément de conduit s'étend dans une direction longitudinale d'une partie supérieure du cadre de module et est connecté à la plaque d'extrémité avant.

2. Le module de batterie selon la revendication 1, dans lequel :
l'élément de conduit comprend une partie de conduit (610) qui est formée dans une direction longitudinale de la partie supérieure du cadre de module ; et une partie de logement d'agent d'extinction d'incendie (620) qui est connectée à la partie de conduit et loge un agent d'extinction d'incendie (630), de préférence de l'eau d'extinction d'incendie.

3. Le module de batterie selon la revendication 2, dans lequel :
la partie de conduit et la partie de logement d'agent d'extinction d'incendie sont formées d'un seul tenant.

4. Le module de batterie selon la revendication 2, dans lequel :
une extrémité de la partie de conduit est emboîtée dans la plaque d'évent et couplée à celle-ci.

5. Le module de batterie selon la revendication 2, dans lequel :
la partie de logement d'agent d'extinction d'incendie est formée de manière à être adjacente à la plaque d'extrémité avant, et
le module de batterie comprend en outre un premier capuchon (650a) qui est formé entre le premier trou d'évent et la partie de logement d'agent d'extinction d'incendie.

6. Le module de batterie selon la revendication 2, comprenant en outre :
• un troisième trou d'évent (155c) qui est formé sur une partie supérieure de la partie de logement d'agent d'extinction d'incendie, et
• un deuxième capuchon (650b) qui recouvre le troisième trou d'évent.

7. Le module de batterie selon la revendication 6, comprenant en outre :
• un quatrième trou d'évent (155d) qui est formé sur la partie de surface latérale de la partie de logement d'agent d'extinction d'incendie, et
• un troisième capuchon (650c) qui recouvre le quatrième trou d'évent.

8. Le module de batterie selon la revendication 7, comprenant en outre :
un pare-flammes (700) formé sur la partie de surface latérale de la partie de logement d'agent d'extinction d'incendie,
dans lequel le pare-flammes est formé de manière à être adjacent au quatrième trou d'évent et au troisième capuchon.

9. Le module de batterie selon la revendication 7, dans lequel :
lorsqu'un emballement thermique se produit, le premier capuchon et le troisième capuchon sont fondus.

10. Le module de batterie selon la revendication 7, dans lequel :
un trou est formé dans le deuxième capuchon, et
lorsqu'un emballement thermique se produit, des vapeurs sont déchargées à travers le trou.

11. Le module de batterie selon la revendication 2, comprenant en outre :
un produit chimique d'extinction d'incendie (800) qui est formé dans la partie de conduit.

12. Le module de batterie selon la revendication 11, dans lequel :
le produit chimique d'extinction d'incendie est formé le long de la direction longitudinale de la partie de conduit.

13. Le module de batterie selon la revendication 11, dans lequel :
le produit chimique d'extinction d'incendie est formé à l'intérieur de la partie de conduit, et est formé de manière à être en contact avec la partie de surface latérale de la partie de conduit.

14. Un bloc-batterie (1000) comprenant le module de batterie selon la revendication 1.

15. Le bloc-batterie selon la revendication 14, comprenant en outre :
• une pluralité des modules de batterie (100) ;
• un cadre de bloc-batterie (1100) qui loge la pluralité de modules de batterie ; et
• un élément de dissipation thermique (1200) interposé entre les modules de batterie adjacents les uns aux autres parmi la pluralité de modules de batterie.
